# EUROPÄISCHE PATENTSCHRIFT

(11) **EP 1 028 995 B1**
(45) Veröffentlichungstag und Bekanntmachung des Hinweises auf die Patenterteilung: **10.10.2001**
(21) Anmeldenummer: 98966238.2
(22) Anmeldetag: 13.11.1998
(51) Int. Cl.: C08J 9/08

(54) **GESCHLOSSENPORIGE SILICONSCHÄUME, VERFAHREN ZU IHRER HERSTELLUNG UND IHRE VERWENDUNG**
SILICON FOAMS WITH CLOSED PORES, METHOD FOR THE PRODUCTION AND USE THEREOF
MOUSSES SILICONE A PORES FERMES, PROCEDE PERMETTANT DE LES PRODUIRE ET UTILISATION

(30) Priorität: 15.11.1997 DE 19750697
(43) Veröffentlichungstag der Anmeldung: 23.08.2000
(73) Patentinhaber: GE Bayer Silicones GmbH & Co. KG, 40699 Erkrath (DE)
(72) Erfinder: MARQUARDT, Gerwig, D-51519 Odenthal (DE)
(86) Internationale Anmeldenummer: EP9807291
(87) Internationale Veröffentlichungsnummer: WO9925761

(56) Entgegenhaltungen:
- EP-A- 0 751 173
- WO-A-97/13804
- US-A- 5 134 170

## Beschreibung

Die vorliegende Erfindung betrifft geschlossenporige, elastische Siliconschäume, erhältlich durch die Umsetzung von additionsvernetzenden Siliconkautschukmischungen mit feinteiligem Ammoniumhydrogencarbonat, ein Verfahren zur Herstellung und deren Verwendung.

Siliconschaummaterialien sind seit längerer Zeit für verschiedene Anwendungsbereiche über verschiedene Herstellverfahren bekannt. Zu den vielfältigen Anwendungsbereichen gehören die thermische Isolierung bei höheren Temperaturen, die Herstellung von weichen Dichtungen, die Verwendung als Dämpfungselemente in Form von Schäumen u.a. Bei diesen Anwendungen werden die bekannten Eigenschaften von elastischen Siliconmassen genutzt: Temperaturstabilität, die geringe Änderung der mechanischen Eigenschaften bei wechselnden Temperaturen, die gute Alterungsstabilität u.a.

Die verschiedenen Verfahren zur Herstellung von Siliconschäumen sind zahlreich und werden je nach den speziellen Erfordernissen benutzt.

Weit verbreitet ist die Verwendung von Siliconmassen mit Siliciumhydrogengruppen, die während des Vernetzungsvorgangs gleichzeitig Wasserstoff abspalten. Als Reaktionspartner können dabei Silanolgruppen, Alkohole oder auch Wasser dienen. Der entstehende Wasserstoff dient als Treibmittel und erzeugt den Siliconschaum mit der gewünschten Porenstruktur, siehe z.B. EP-A 416 229. Ein weiteres Verfahren wird bei der Erzeugung von Siliconschaum aus heißvulkanisierenden, peroxidisch vernetzbaren Siloxanmassen verwendet. Hier dienen in der Wärme zersetzliche Substanzen als Treibmittel, die für den Augenblick der Vulkanisation die aufgeschäumte Siloxanmasse bereitstellen. Dieses Verfahren hat einen breiten Eingang in die Technik erfahren und wird z.B. in US-A 2 857 343 beschrieben.

Weiterhin werden Verfahren beschrieben, bei denen die Gaslöslichkeit z.B. in feuchtigkeitshärtenden Siliconmassen besonders bei höherem Druck ausgenutzt wird. Bei Entspannung der Massen sinkt die Löslichkeit schlagartig und die sich entwickelnden Gasblasen erzeugen den gewünschten Siliconschaum, der dann z.B. durch Wasserzutritt aus der Luftfeuchtigkeit vernetzt wird, siehe z.B. US-A 4 229 548.

Eine immer wichtiger werdende Gruppe der Siliconmassen sind die Flüssigsilicone oder Liquid Silicon Rubber (LSR). Sie bieten gegenüber anderen Siliconmassen verfahrenstechnische Vorteile bei der Herstellung von Gummiartikeln und eröffnen so neue technologische Möglichkeiten. LSR-Massen sind platinkatalysierte, additionsvernetzende Siliconmischungen, die in Spritzgießmaschinen rationell zu Formartikeln verarbeitet werden. Die fließfähigen, nivellierenden Siliconmischungen werden ebenfalls als Beschichtungen von Textilien verwendet, wo sie dann durch Wärmeeinwirkung vernetzt werden.

Auch bei den LSR-Massen besteht der Bedarf, schäumbare Mischungen zu entwickeln. So besteht ein Bedarf an dreidimensional geformten Schaumartikeln. Hierfür gab es bislang keine technisch befriedigende Lösung, da bisher nur Schaumplatten hergestellt wurden, aus denen Formartikel ausgestanzt werden mußten. Diese Art der Herstellung ist zeitaufwendig und gleichzeitig mit großen Materialverlusten (Verschnitt) verbunden. Eine kostengünstige Herstellung, die außerdem eine dreidimensionale Formung erlaubt, wäre deshalb die Herstellung des Siliconschaum-Formartikels im Spritzgußverfahren. Dieses Ziel konnte aufgrund fehlender Abstimmung der Zersetzungstemperatur von verwendeten Treibmitteln und der für die Vernetzung notwendige Vulkanisationstemperatur nicht erreicht werden. Es gilt dabei zu beachten, daß beide Temperaturen eng beieinander liegen, so daß das Aufschäumen durch die Zersetzung des Treibmittels durch eine parallel einsetzende Vernetzung verhindert wird. Das wird z.B. sehr deutlich bei der Verwendung von Natriumhydrogencarbonat als Treibmittel zur Herstellung eines Siliconschaum-Formartikels aus einem LSR-Produkt mittels Spritzgießmaschine. Dabei sind nur Formartikel erhältlich, die nur wenige Gasblasen enthalten, so daß die Qualitätsforderungen für einen Siliconschaum in keiner Weise erfüllt werden.

Ähnlich liegen die Probleme bei der Verwendung von LSR bei der Herstellung von mit Siliconschaum beschichteten Textilien und Geweben. Hier ist ebenfalls einmal die vollständige Aufschäumung vor der Vernetzung gefordert. Bislang verwendete Treibmittel erzeugten nur Schäume mit einem sehr geringen Schaumfaktor, da die einsetzende Vernetzung ein optimales Aufschäumen nicht zuließ. Auch hier besteht die Forderung nach einer geeigneten Mischung. Zusätzlich aber existiert die weitere wichtige Forderung nach Flammwidrigkeit des Siliconschaums, da mit Siliconschaum beschichtete Gewebe häufig in feuergefährdeten Bereichen eingesetzt werden. Diese Notwendigkeit wird in keiner Weise durch das in EP-A 751 173 beschriebene Natriumhydrogencarbonat erfüllt. Zwar wird auch Natriumhydrogencarbonat als intumeszierende Substanz in massiven Siliconkautschuken eingesetzt, da bei Hitzeeinwirkung durch Aufschäumen ein wärmeisolierender Effekt eintritt, siehe DE-A 3 713 267 und US-A 3 634 136. Natriumhydrogencarbonat im Siliconschaum selbst aber bewirkt nachteiligerweise eine Erhöhung der Brennbarkeit.

Es bestand daher ein Bedarf an einem Treibmittel, das bei vergleichsweise tiefer Temperatur treibendes Gas abspaltet, wobei gleichzeitig die Forderung nach flammwidrigen Siliconschäumen erfüllt wird.

Aufgabe der vorliegenden Erfindung war daher die Bereitstellung von geschlossenporigen Siliconmassen, die mit einem unbedenklichen Treibmittel aufgeschäumt werden können, die die Nachteile des Standes der Technik nicht aufweisen und die auf Spritzgießmaschinen zu Formschaumartikel verarbeitbar sind.

Überraschenderweise wurde nun gefunden, daß diese Aufgabe durch die Umsetzung von additionsvernetzenden Siliconmassen mit feinteiligem Ammoniumhydrogencarbonat enthaltendem Treibmittel gelöst werden kann. Diese Mischungen lassen sich auf Spritzgußmaschinen verarbeiten und verfügen zudem über eine hohe Flammwidrigkeit.

Gegenstand der vorliegenden Erfindung sind daher geschlossenporige Siliconschäume, erhältlich durch die Umsetzung einer Mischung aus
a) 100 Gew.-Teilen mindestens eines vinylgruppenhaltigen linearen oder verzweigten Organopolysiloxans mit mindestens 2 Vinylgruppen mit einer Viskosität von 0,1 bis 1000 Pa.s,
b) 3 bis 200, bevorzugt 5 bis 50 Gew.-Teilen mindestens eines, gegebenenfalls oberflächlich modifizierten Füllstoffs
c) 0,5 bis 10, bevorzugt 1 bis 8 Gew.-Teilen Hydrogensiloxan mit mindestens 3 SiH-Funktionen pro Molekül,
d) 0,01 bis 10, bevorzugt 0,03 bis 5 ppm Platin in Form eines Platinkatalysators,
e) 0,01 bis 5, bevorzugt 0,03 bis 3 Gew.-Teilen eines Inhibitors und
f) 0,3 bis 10 Gew.-Teilen feinteiligem Ammoniumhydrogencarbonat als Treibmittel mit einer mittleren Korngröße unter 40 µm,
die bei Temperaturen oberhalb 60 °C aufgeschäumt und vulkanisiert werden.

Bei den vinylgruppenhaltigen Organopolysiloxanen (a) handelt es sich um vorzugsweise lineare oder verzweigte Organopolysiloxane mit mindestens 2 Vinylgruppen, deren Viskosität mit einem Rotationsviskosimeter bei 20°C im Bereich von 0,1 bis 1000 Pa.s liegen kann. Besonders bevorzugt sind dabei vinylendgestoppte Polydimethylsiloxane mit einer Viskosität von 0,2 bis 150 Pa.s, gegebenenfalls in Mischung mit Polydimethylsiloxanen, die seitenständige Vinylgruppen enthalten.

Alle Viskositätsangaben wurden bei 20°C gemäß DIN 53 019 ermittelt.

Als Füllstoffe (b) sind beispielsweise Extenderfüllstoffe, wie z.B. Quarz- und Cristobalitmehl, sowie gefällte oder pyrogene Kieselsäuren, deren Oberfäche vorzugsweise vor oder während des Mischprozesses mit an sich bekannten Substanzen, wie z.B. Silazanen mit und ohne Zusatz von Wasser, behandelt werden.

Komponente b) ist dabei vorzugsweise feinteilige, pyrogene oder gefällte Kieselsäure, die gegebenenfalls mit Hexamethyldisilazan und/oder Tetramethyldivinyldisilazan oberflächlich modifiziert ist.

Komponente (c) im Sinne der Erfindung sind bekannte Polyorganosiloxane, die an mindestens drei Siliciumatomen Wasserstoffatome tragen, wie z.B. Verbindungen der Formel 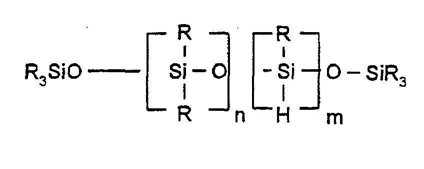 mit
- R =: C₁-C₈-Alkyl, C₆-C₈-Aryl
- m ≥: 3 und
- m+n =: 3 - 1 000 und wobei die Einheiten -SiOR₂ und -SiRHO statistisch im Molekül verteilt sind.

Bei dem Pt-Katalysator (d) handelt es sich vorzugsweise um Pt-Komplexe, die die Anlagerung von Si-H-Gruppen an Vinylsiloxane katalysieren. Bevorzugt sind daher Pt(O)-Komplexe mit Vinylsiloxanen als Liganden. Es können jedoch auch andere Metallkomplexe, wie z.B. Rh-Verbindungen verwendet werden. Vorzugsweise werden in den Siloxanpolymeren lösliche Pt(0)-Komplexe mit Vinylsiloxanliganden eingesetzt.

Als Inhibitoren (e) eignen sich alle Verbindungen, die eine gezielte Reduktion der Vernetzungsgeschwindigkeit ermöglichen, jedoch keine irreversible Schädigung des Katalysators bewirken.

Besonders bevorzugt werden kurzkettige oder zyklische Polydimethylsiloxane mit mehreren benachbarten Vinylgruppen an den Siliciumatomen, wie z.B. Tetramethyldivinyldisiloxan und/oder Tetramethyltetravinylcyclotetrasiloxan.

Die mittlere Korngröße von Komponente f), deren Bestimmung mittels Lichtmikroskop unter Verwendung einer geeichten Skala durch Auszählung und Mittelwertbildung erfolgte, liegt bevorzugt unter 20 µm.

Die Dosierung des Treibmittels (NH₄)HCO₃ wird nach dem gewünschten Aufschäumgrad gewählt. Vorzugsweise werden 0,3 bis 5 Teile eingesetzt.

Darüber hinaus können weitere Zusätze, wie z.B. Farbpigmente oder Additive zur Erhöhung der Flammwidrigkeit, wie z.B. Ruß oder TiO₂, eingesetzt werden.

Gegenstand der vorliegenden Erfindung ist zudem ein Verfahren zur Herstellung der erfindungsgemäßen geschlossenporigen Siliconschäume, wonach die Komponenten a) bis f) bei einer Temperatur ≤50°C vermischt, auf einer Unterlage aufgerakelt und in Heißluft bei Temperaturen oberhalb 60°C, vorzugsweise bei 100 bis 200°C, aufgeschäumt und gleichzeitig ausgehärtet werden. Alternativ kann die Mischung auch in einer teilgefüllten Form, z.B. mit einem Spritzgießautomaten, bei den gleichen Temperaturen zu einem Formschaum vulkanisiert werden.

Gegenstand der Erfindung ist zudem die Herstellung von Formschaum, wonach die Komponenten a) bis c) und gegebenenfalls f) vermischt, mittels Spritzguß in Formen gepreßt und dort bei Temperaturen oberhalb 60°C aufgeschäumt und vulkanisiert werden.

Gegenstand der vorliegenden Erfindung ist zudem die Verwendung der erfindungsgemäßen Schäume auf Textilien, auch unter Einarbeitung von Drahtgeweben als Polstermaterialien sowie als Wärmedämm- und Brandschutzmaterialien.

Die nachfolgenden Beispiele, in denen alle Teile Gewichtsteile bedeuten, erläutern die Erfindung, ohne dabei jedoch beschränkend zu wirken.

### Ausführungsbeispiele

### Beispiel 1 (Vergleich)

In einem Dissolver wurden zur Herstellung der Basismischung 5,0 kg vinylendgestopptes Polydimethylsiloxan (Polymer Typ a) mit einer Viskosität bei 20°C von 10 Pa.s sowie 9,0 kg vinylendgestopptes Polydimethylsiloxan mit einer Viskosität bei 20°C von 65 Pa.s mit 1,35 kg Hexamethyldisilazan und 0,47 kg Wasser gemischt und anschließend mit 6 kg pyrogener Kieselsäure mit einer BET-Oberfläche von 300 m²/g (gemessen über N₂-Absorption) zu einer homogenen Masse vermischt (Einarbeitung des Füllstoffs gemäß DE-OS 2 535 334). Die Mischung wurde zunächst auf 130°C erwärmt und 1,5 h im geschlossenen Dissolver gerührt und danach bei 160°C unter Vakuum von Wasser und anderen flüchtigen Bestandteilen befreit. Nach dem Erkalten wurde diese Basismischung zur Herstellung der A-Komponente mit 4,0 kg Polymer Typ a sowie mit 0,0033 kg eines Tetramethyltetravinylcyclotetrasiloxans mit einem Gehalt an 15 % Pt in Form eines Pt-Komplexes (entspricht 10 ppm Pt in der Gesamtformulierung) mit Tetramethyltetravinylcyclotetrasiloxan als Ligand vermischt.

Zur Herstellung der B-Komponente wurde eine Basismischung mit den gleichen Mengen wie oben hergestellt, jedoch mit 3,5 kg Polymer Typ a, 0,04 kg Ethinylcyclohexanol sowie 0,75 kg eines trimethylsilylendgestoppten Polymethylhydrogensiloxans mit durchschnittlich 20 Methylhydrogensiloxyeinheiten und 20 Dimethylsiloxyeinheiten per Molekül vermischt.

Den beiden Komponente A und B wurden je 100 g entnommen und zusammen mit 4 g feinteiligem Natriumhydrogencarbonat intensiv durchmischt.

Die mittlere Partikelgröße des NaHCO₃, die mittels Lichtmikroskop unter Verwendung einer geeichten Skala durch Auszählung und Mittelwertbildung bestimmt wurde, betrug 15 µm.

Die Mischung wurde flächig in einer Schichtdicke von 1 mm auf eine Aluminiumfolie aufgerakelt und bei einer Temperatur von 180°C in einem Umlufttrockenschrank 5 Minuten aufgeschäumt und vulkanisiert. Aus der ca. 2,5 mm dicken Schaumplatte wurden 5 Streifen mit einer Abmessung von 12,7 mm x 150 mm herausgeschnitten und für einen Laborbrandtest in Anlehnung an DIN 54 336 verwendet. Dazu wurden die Streifen am unteren Ende mit einer Butangasbrennerflamme 15 sec. lang beflammt und die Nachbrennzeit bzw. Nachglühzeit gemessen.

Die aus den 5 Proben gemittelte Nachbrennzeit betrug 129 sec., wobei drei Proben sogar über die ganze Länge abbrannten. Bei allen Proben war die Nachbrennzeit nicht nur durch Nachglühen sondern zusätzlich durch eine z.T. prasselnde Flammenscheinung gekennzeichnet.

### Beispiel 2 (erfindungsgemäß)

Den im Beispiel 1 hergestellten A- und B-Komponenten wurden ebenfalls je 100 g entnommen, zusammen mit 4 g Ammoniumhydrogencarbonat intensiv durchmischt. Die mittlere Partikelgröße des NH₄HCO₃, die mittels Lichtmikroskop unter Verwendung einer geeichten Skala durch Auszählung und Mittelwertbildung bestimmt wurde, betrug 15 µm. Die Mischung wurde flächig in einer Schichtdicke von 1 mm auf eine Aluminiumfolie aufgerakelt und bei einer Temperatur von 180°C in einem Umlufttrockenschrank 5 Minuten aufgeschäumt und vulkanisiert.

Wie beim Beispiel 1 wurden aus der ca. 5 mm starken Schaumplatte 5 Streifen mit der Abmessung 12,7 mm x 150 mm herausgeschnitten und dem o.g. gleichen Laborbrandtest unterworfen. Hier betrug die gemittelte Nachglühzeit nur 34 sec. Dabei ist zusätzlich zu bemerken, daß
- eine schwache Flammerscheinung nur wenige Sekunden nach dem Entfernen der Brennerflamme auftrat und dann nur ein schwaches Glühen verblieb,
- eine prasselnde Feuererscheinung nicht auftrat und
- keine der Proben über die ganze Länge abbrannte.

Dieses Beispiel zeigte somit eine verbesserte Flammwidrigkeit bei der Verwendung von NH₄HCO₃ gegenüber NaHCO₃.

### Beispiel 3 (Vergleich)

In einem Dissolver wurden zur Herstellung der Basismischung 15,2 kg vinylendgestopptes Polydimethylsiloxan (Polymer Typ a) mit einer Viskosität von 10 Pa.s mit 2 kg Hexamethyldisilazan, 0,13 kg Tetramethyldivinyldisilazan und 0,8 kg Wasser gemischt und anschließend mit 7,6 kg pyrogener Kieselsäure mit einer BET-Oberfläche von 300 m²/g zu einer homogenen Masse vermischt (Einarbeitung des Füllstoffs gemäß DE-OS 2 535 334). Die Mischung wurde zunächst auf 130°C erwärmt und 1,5 h im geschlossenen Dissolver gerührt und danach bei 160°C unter Vakuum von Wasser und anderen flüchtigen Bestandteilen befreit. Nach dem Erkalten wurde diese Basismischung zur Herstellung der A-Komponente mit 19,1 kg Polymer Typ a, 1,43 kg Tetramethyltetravinylcyclotetrasiloxan sowie mit weiteren 0,0109 kg eines Tetramethyltetravinylcyclotetrasiloxans mit einem Gehalt an 1500 ppm Pt in Form eines Pt-Komplexes (entspricht 0,184 ppm Pt in der Gesamtformulierung) mit Tetramethyltetravinylcyclotetrasiloxan als Ligand. Eingemischt wurden 0,69 kg eines feinteiligen Natriumhydrogencarbonats. Die mittlere Partikelgröße, die mittels Lichtmikroskop unter Verwendung einer geeichten Skala durch Auszählung und Mittelwertbildung bestimmt wurde, betrug 10 µm.

Zur Herstellung der B-Komponente wurde eine Basismischung mit den gleichen Mengen wie oben hergestellt und jetzt mit 15,1 kg Polymer Typ a, 5,07 kg eines trimethylsilylendgestoppten Polymethylhydrogensiloxans mit durchschnittlich 20 Methylhydrogensiloxyeinheiten und 20 Dimethylsiloxyeinheiten per Molekül sowie ebenfalls mit 0,65 kg des o.g. Natriumhydrogencarbonats vermischt.

Beide Komponenten wurden in einer Spritzgußmaschine (der Fa. Arburg) gemischt und in eine gekürzte Plattenform mit den Ausmaßen: Länge 175, Breite 115 und Dicke 2 mm sowie 6 mm (zweigeteilt) gepreßt, wobei folgende Bedingungen das beste Ergebnis zeigen:

| | |
|---|---|
| Einspritzzeit | 2,8 bis 36 sec |
| Temperatur | 180 bis 185°C |
| Vulkanisationszeit | 70 sec |

Trotz der durchgeführten Optimierungsversuche zeigte sich selbst bei der besten Einstellung eine nur sehr unbefriedigende Schaumausbildung. Das war auch bei einer Zugabe von 2 500 ppm des Inhibitors Ethinylcyclohexanol der Fall. Bei Temperaturen unter 180°C war eine Schaumausbildung nicht zu beobachten, während bei höheren Temperaturen um 180°C trotz des zugefügten Inhibitors eine zu rasche Vernetzung auftrat, so daß die Treibmittelzersetzung eine Schaumbildung nicht mehr bewirken kann. Die Platte erschien deshalb zu glasig mit nur wenigen Gasblasen.

### Beispiel 4 (erfindungsgemäß)

Verwendet wurden die beiden unter Beispiel 1 hergestellten Komponenten A und B, wobei in die Komponente A zusätzlich ein Batch, bestehend aus 40 % Ammoniumhydrogencarbonat (Teilchengröße 15 µm, vermessen wie in Beispiel 2) und 60 % eines vinylendgestoppten Polydimethylsiloxans vom Typ a (Viskosität 10 Pa.s) bei einer Temperatur unter 50°C in einer Menge eingemischt wurden, daß die Konzentration an Ammoniumhydrogencarbonat 4 % betrug. Dadurch wurde die in der Spritzgießmaschine (Firma Arburg) aus den beiden Komponenten entstehende Mischung 2-prozentig an Ammoniumhydrogencarbonat. Diese Mischung wurde bei folgenden Bedingungen in eine geheizte Plattenform mit den Ausmaßen: Länge 175 mm, Breite 115 mm und Dicke 2 mm sowie 6 mm (zweigeteilt) gepreßt:

| | |
|---|---|
| Einspritzzeit | 3 - 115 |
| Temperatur | 150 - 160°C |
| Vulkanisationszeit | 70 - 90 s |

Bei diesen Bedingungen erhielt man eine Schaumplatte mit homogener Schaumstruktur. Die Schaumdichte betrug etwa 0,6 g/cm³. Bei Optimierungsversuchen zeigte sich, daß sich die Zugabe des Inhibitors Ethinylcyclohexanol im Bereich um 1000 - 3 000 ppm günstig auswirkte. In jedem Fall erreichte man bei der relativ niedrigen Formentemperatur von 150 - 160°C bereits die gewünschte homogene Schaumstruktur.

## Patentansprüche

1. Geschlossenporige Siliconschäume, erhältlich durch die Umsetzung einer Mischung aus
a) 100 Gew.-Teilen mindestens eines vinylgruppenhaltigen linearen oder verzweigten Organopolysiloxans mit mindestens 2 Vinylgruppen mit einer Viskosität von 0,1 bis 1000 Pa.s,
b) 3 bis 200 Gew.-Teilen mindestens eines, gegebenenfalls oberflächlich modifizierten Füllstoffs,
c) 0,5 bis 10 Gew.-Teilen Hydrogensiloxan mit mindestens 3 SiH-Funktionen pro Molekül,
d) 0,01 bis 10 ppm Platin in Form eines Platinkatalysators,
e) 0,01 bis 5 Gew.-Teilen eines Inhibitors und
f) 0,3 bis 10 Gew.-Teilen feinteiligem Ammoniumhydrogencarbonat als Treibmittel mit einer mittleren Korngröße unter 40 µm,
die bei Temperaturen oberhalb 60°C aufgeschäumt und vulkanisiert werden.

2. Geschlossenporige Siliconschäume nach Anspruch 1, **dadurch gekennzeichnet, daß** Komponente a) ein vinylendgestopptes Polydimethylsiloxan mit a) einer Viskosität von 0,5 bis 150 Pa.s, gegebenenfalls in Mischung mit Polydimethylsiloxanen, die seitenständige Vinylgruppen enthalten, ist.

3. Geschlossenporige Siliconschäume nach einem der Ansprüche 1 bis 2, **dadurch gekennzeichnet, daß** Komponente b) feinteilige, pyrogene oder gefällte Kieselsäure, die gegebenenfalls mit Hexamethyldisilazan/Tetramethyldivinyldisilazan oberflächlich modifiziert sein kann, ist.

4. Geschlossenporige Siliconschäume nach einem der Ansprüche 1 bis 3, **dadurch gekennzeichnet, daß** Komponente d) mindestens ein Pt(0)-Komplex mit Vinylsiloxanen als Liganden ist.

5. Geschlossenporige Siliconschäume nach einem der Ansprüche 1 bis 4, **dadurch gekennzeichnet, daß** der Inhibitor e) Tetramethyldivinyldisiloxan und/oder Tetramethyltetravinylcyclotetrasiloxan und/oder Ethinylcyclohexanol ist.

6. Geschlossenporige Siliconschäume nach einem der Ansprüche 1 bis 5, **dadurch gekennzeichnet, daß** die mittlere Korngröße des Treibmittels f) unter 20 µm liegt.

7. Verfahren zur Herstellung von geschlossenporigen Siliconschäumen, **dadurch gekennzeichnet, daß** Mischungen nach Anspruch 1 aus den Komponenten a) bis f) bei einer Temperatur ≤50°C vermischt, auf einer Unterlage ausgerakelt und bei Temperaturen oberhalb 60°C aufgeschäumt und gleichzeitig ausgehärtet werden.

8. Verfahren zur Herstellung von Formschaum, **dadurch gekennzeichnet, daß** die Komponenten a) bis c) und gegebenenfalls e) mittels Spritzguß in Formen gepreßt und dort bei Temperaturen >60°C aufgeschäumt und vulkanisiert werden.

9. Verwendung der Siliconschäumen nach Anspruch 1 auf Textilien auch unter Einarbeitung von Drahtgeweben als Polstermaterial sowie als Wärmedämm- und Brandschutzmaterial.

## Claims

1. Closed-cell silicone foams obtainable by the reaction of a mixture of
a) 100 parts by weight of at least one vinyl-containing linear or branched organopolysiloxane containing at least 2 vinyl groups and having a viscosity of 0.1 to 1000 Pa.s,
b) 3 to 200 parts by weight of at least one optionally surface-modified . filler,
c) 0.5 to 10 parts by weight of a hydrosiloxane containing at least 3 SiH functions per molecule,
d) 0.01 to 10 ppm of platinum in the form of a platinum catalyst,
e) 0.01 to 5 parts by weight of an inhibitor, and
f) 0.3 to 10 parts by weight of a finely divided ammonium bicarbonate blowing agent having an average particle size of below 40 *µ*m,
which are expanded and vulcanized at temperatures above 60°C.

2. Closed-cell silicone foams according to Claim 1, **characterized in that** component a) is a vinyl-end-stopped polydimethylsiloxane having a) a viscosity of 0.5 to 150 Pa.s, optionally in mixture with polydimethylsiloxanes containing vinyl side groups.

3. Closed-cell silicone foams according to either of Claims 1 and 2, **characterized in that** component b) is finely divided pyrogenic or precipitated silica which may optionally have been surface-modified with hexamethyldisilazane/tetramethyldivinyldisilazane.

4. Closed-cell silicone foams according to any of Claims 1 to 3, **characterized in that** component d) is at least one Pt(0) complex with vinylsiloxanes as ligands.

5. Closed-cell silicone foams according to any of Claims 1 to 4, **characterized in that** the inhibitor e) is tetramethyldivinyldisiloxane and/or tetramethyltetravinylcyclotetrasiloxane and/or ethynylcyclohexanol.

6. Closed-cell silicone foams according to any of Claims 1 to 5, **characterized in that** the average particle size of the blowing agent f) is below 20 *µ*m.

7. Process for producing closed-cell silicone foams, **characterized in that** mixtures of components a) to f) according to Claim I are mixed at a temperature of ≤50°C, are knife-coated onto a surface and expanded and simultaneously cured at temperatures above 60°C.

8. Process for producing moulded foam, **characterized in that** components a) to c) and optionally e) are injection moulded into moulds and are expanded and vulcanized therein at temperatures >60°C.

9. Use of the silicone foams according to Claim I on textiles with or without incorporation of woven wire cloth as cushioning material, and as thermal insulation material and as fire protection material.

## Revendications

1. Mousses de silicones à cellules fermées, obtenues par réaction d'un mélange de
a) 100 parties en poids d'au moins un organopolysiloxane linéaire ou ramifié contenant des groupes vinyle, à au moins deux groupes vinyle, et à une viscosité de 0,1 à 1000 Pa.s,
b) 3 à 200 parties en poids d'au moins une matière de charge éventuellement modifiée en surface,
c) 0,5 à 10 parties en poids d'un hydrogénosiloxane à au moins trois fonctions SiH par molécule,
d) 0,01 à 10 ppm de platine sous forme d'un catalyseur au platine,
e) 0,01 à 5 parties en poids d'un inhibiteur et
f) 0,3 à 10 parties en poids d'un bicarbonate d'ammonium en fines particules servant d'agent porogène, à une dimension de grain moyenne inférieure à 40 µm,
qu'on fait gonfler et vulcaniser à des températures supérieures à 60°C.

2. Mousses de silicones à cellules fermées selon la revendication 1, **caractérisées en ce que** le composant a) est un polydiméthylsiloxane à groupes terminaux vinyle présentant a) une viscosité de 0,5 à 150 Pa.s, éventuellement en mélange avec des polydiméthylsiloxanes à groupes vinyle dans les chaînes latérales.

3. Mousses de silicones à cellules fermées selon l'une des revendications 1 à 2, **caractérisées en ce que** le composant b) consiste en silice pyrogène ou précipitée en fines particules qui peut le cas échéant être modifiée en surface par de l'hexaméthyldisilazane/tétraméthyldivinyldisilazane.

4. Mousses de silicones à cellules fermées selon l'une des revendications 1 à 3, **caractérisées en ce que** le composant d) consiste en au moins un complexe de Pt(0) à ligands de vinylsiloxanes.

5. Mousses de silicones à cellules fermées selon l'une des revendications 1 à 4, **caractérisées en ce que** l'inhibiteur e) consiste en tétraméthyldivinyldisiloxane et/ou tétraméthyltétravinylcyclotétrasiloxane et/ou éthynylcyclohexanol.

6. Mousses de silicones à cellules fermées selon l'une des revendications 1 à 5, **caractérisées en ce que** la dimension de grain moyen de l'agent porogène f) est inférieure à 20 µm.

7. Procédé de préparation de mousses de silicones à cellules fermées, **caractérisé en ce que** l'on prépare des mélanges selon la revendication 1 des composants a) à f) à une température inférieure ou égale à 50°C, on les applique à la racle sur un support et on les fait gonfler et simultanément durcir à des températures supérieures à 60°C.

8. Procédé pour la préparation d'une mousse moulée, **caractérisé en ce que** l'on injecte les composants a) à c) et le cas échéant e) par injection dans des moules dans lesquels on les fait gonfler en mousse et vulcaniser à des températures supérieures à 60°C.

9. Utilisation des mousses de silicone selon la revendication 1, sur des matières textiles, également avec incorporation de toiles métalliques, en tant que matières de capitonnage, matières isolantes de la chaleur et matières protégeant contre l'incendie.
